# FASCICULE DE BREVET EUROPEEN

(11) **EP 0 484 192 B1**
(45) Date de publication et mention de la délivrance du brevet: **18.05.1994**
(21) Numéro de dépôt: 91402598.6
(22) Date de dépôt: 30.09.1991
(51) Int. Cl.: F04B 49/00, B60T 8/40

(54) **Pompe hydraulique**
Flüssigkeitspumpe
Hydraulic pump

(30) Priorité: 30.10.1990 FR 9013433
(43) Date de publication de la demande: 06.05.1992
(73) Titulaire: ALLIEDSIGNAL EUROPE SERVICES TECHNIQUES, 93700 Drancy (FR)
(72) Inventeur: Lebret, Pierre, BENDIX EUROPE, F-93700 Drancy (FR)
(74) Mandataire: Bentz, Jean-Paul

(56) Documents cités:
- EP-A- 0 283 348
- EP-A- 0 327 218
- FR-A- 1 002 780

## Description

La présente invention concerne une pompe hydraulique comprenant au moins un piston à cycle alternatif présentant une phase d'aspiration et une phase de refoulement, et coulissant dans un cylindre fixe, la pompe comportant en outre un clapet anti-retour d'aspiration disposé entre une source de fluide sous basse pression et une chambre de travail définie dans le cylindre, et un clapet anti-retour de refoulement disposé entre la chambre de travail et une chambre de sortie du fluide sous haute pression reliée à un circuit d'utilisation, cette chambre de sortie présente une paroi mobile en fonction de la pression qui y règne.

Une telle pompe est par exemple décrite dans EP-A-0 327 218 dans une application à un circuit de freinage de véhicule comportant un dispositif d'anti-blocage des roues.

L'application décrite dans le document précité présente de graves inconvénients. Par exemple, on sait que pendant les périodes de détente de la pression dans les freins commandés par une électrovalve, la pression du fluide issu de la pompe est directement appliquée à la chambre de travail du maître cylindre, et il en résulte des sensations très désagréables pour le conducteur.

En outre, pendant les périodes de fonctionnement actif du dispositif d'anti-blocage, la pompe travaille en permanence en pression élevée, ce qui induit une fatigue prématurée de ses composants.

La présente invention a pour but d'obvier notamment à ces inconvénients.

Conformément à l'invention ce problème est résolu dans une pompe hydraulique par une paroi mobile étant susceptible de commander le blocage du clapet de refoulement en position ouverte sensiblement pendant la majeure partie de la phase d'aspiration lorsque la pression dans la chambre de sortie est supérieure à une pression donnée. Ainsi, dans ce cas, le clapet d'aspiration reste fermé et la pompe re-aspire le fluide qu'elle vient de refouler.

Selon un autre aspect de l'invention, la paroi est mobile à l'encontre d'un ressort de raideur déterminée.

D'autres caractéristiques de l'invention sont données dans les sous revendications.

L'invention sera mieux comprise et d'autres buts, avantages et caractéristiques de celle-ci apparaîtront plus clairement à la lecture de la description qui suit d'un mode de réalisation donné à titre non limitatif et à laquelle est jointe une planche de dessin sur laquelle :
- La Figure 1 représente schématiquement en coupe un mode de réalisation préféré de la pompe selon l'invention dans une application à un circuit de freinage ;
- La Figure 2 représente partiellement et schématiquement en coupe un autre mode de réalisation de l'invention ;
- La Figure 3 illustre schématiquement un perfectionnement apporté à l'invention, et
- La Figure 4 représente schématiquement un mode de réalisation appliqué différemment dans un circuit de freinage.

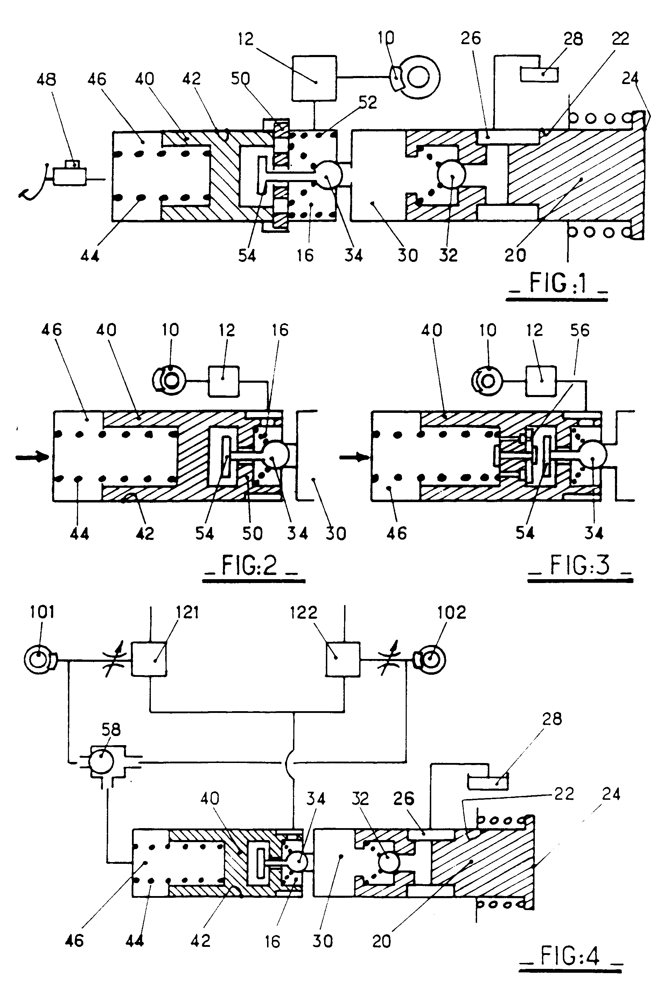

En référence maintenant plus particulièrement à la Figure 1, l'homme du métier reconnaîtra un frein 10 alimenté en fluide sous pression par l'intermédiaire d'un dispositif d'anti-blocage 12 comportant, de façon classique, au moins une électrovalve et connecté à la chambre de sortie 16 d'une pompe.

Cette pompe comporte au moins un piston 20 coulissant dans un alésage 22 d'un cylindre fixe sous l'effet d'une came rotative ((non représentée) s'appuyant sur la face 24 du piston 20.

L'orifice d'aspiration 26 de la pompe est reliée à un réservoir 28 de fluide sous basse pression.

Entre la chambre de travail 30 de la pompe et l'orifice d'aspiration 26 est disposé de façon conventionnelle un clapet anti-retour d'aspiration 32 constitué dans les exemples représentés par une bille chargée par un ressort pour fermer au repos la communication entre l'orifice d'aspiration et la chambre de travail 30.

De façon conventionnelle également, un clapet anti-retour de refoulement 34 constitué par une bille chargée par un ressort, ferme au repos la communication entre la chambre de travail 30 et la chambre de sortie 16.

Conformément à l'invention, la chambre de sortie 16 est une chambre à volume variable. Elle est, en effet, constituée par l'espace laissé libre par un piston 40 coulissant dans un alésage 42 et constituant une paroi mobile. Le piston 40 est chargé par un ressort 44 de façon qu'en absence de pression dans la chambre de sortie 16, celle-ci présente un volume minimal. Dans l'exemple représenté Figure 1, la chambre 46 opposée à la chambre de sortie 16 par rapport au piston 40 est en communication avec la chambre de travail d'un maître cylindre 48. Le piston 40 est en appui au repos sur'une butée annulaire 50 elle même chargée par un ressort 52 à l'encontre du piston 40. Cette butée annulaire 50 est susceptible de se déplacer dans une gorge prévue à cet effet dans l'alésage 42 en même temps que le piston 40. Cette butée est pourvu d'une queue solidaire d'une butée discoïde 54 susceptible de coopérer avec la butée annulaire 50.

Sur l'exemple représenté Figure 2, la butée annulaire 50' est solidaire du piston 40.

Le fonctionnement est le suivant. La pompe refoule toujours de façon conventionnelle le fluide sous pression dans la chambre de sortie 16, le clapet 34 s'ouvrant pendant les phases de refoulement, tandis que le clapet 32 est fermé pendant celles-ci.

Tant que la pression dans la chambre de sortie 16 est inférieure à une pression déterminée, pendant les phases d'aspiration, la pompe fonctionne de façon conventionnelle : le clapet 32 s'ouvre permettant l'aspiration du fluide dans le réservoir 28 et le clapet 34 est fermé.

Lorsque la pression dans la chambre de sortie 16 dépasse une valeur déterminée par l'effort exercé par un ressort 44 et la pression régnant dans la chambre 46, le piston 40 se meut (vers la gauche sur les Figures), entraînant avec lui (au moins partiellement Figure 1) la butée annulaire 50, 50'. Pour une pression déterminée, la butée annulaire 50, 50' entre en contact avec la butée discoïde 54 solidaire du clapet 34 et entraîne ce dernier dans son déplacement. Il en résulte alors que le clapet 34 ne peut plus se refermer pendant au moins une partie de la phase d'aspiration. La pompe aspire alors le fluide qu'elle venait juste de refouler dans la chambre de sortie 16 et le clapet 32 reste fermée. De ce fait, la pression dans la chambre de sortie 16 ne peut plus croître, et il n'y a pas de circulation inutile de fluide pompé du réservoir 28.

On obtient ainsi une limitation de la pression du fluide fourni au frein 10 à une valeur sensiblement inférieure ou égale à celle régnant dans le maître cylindre, et une économie de fluide.

En outre, pendant les phases de détente de l'électrovalve du dispositif d'anti-blocage 12, pendant lesquelles la chambre de sortie 16 est isolée du circuit utilisateur, il ne se crée aucune surpression susceptible d'endommager ou de fatiguer la pompe.

A noter, d'autre part, que lorsque la pression dans la chambre de sortie 16 a atteint la dite valeur déterminée permettant au clapet 34 de rester ouvert, cette pression exerce alors un effet moteur favorable sur l'axe d'entraînement de la pompe.

Sur la Figure 3, un orifice 56 a été pratiqué dans le piston 40 de manière à créer une communication pourvue d'une restriction entre la chambre de sortie 16 et la chambre de travail du maître cylindre 48, mais un tel orifice 56 n'est pas nécessaire au bon fonctionnement qui vient d'être décrit. Il permet seulement si nécessaire, de créer un léger flux d'huile entre maître cylindre et dispositif d'antiblocage.

Dans les exemples ci-dessus, la chambre 46 située à l'arrière du piston 40 est reliée à la chambre de travail du maître cylindre 48, pour assurer une modulation de la pression maximale dans la chambre de sortie 16 fonction de celle régnant dans la chambre de travail du maître cylindre.

L'homme du métier comprendra que cette modulation n'est pas toujours nécessaire et que le piston 40 peut n'être chargé que par le ressort 44, la pression maximale dans la chambre de sortie 16 n'étant alors déterminée que par la raideur de ce ressort 44 et ne pouvant plus être modulée.

On peut également moduler cette pression maximale en fonction de la pression régnant dans les freins. On a représenté schématiquement Figure 4 une telle modulation. Sur cette Figure 4, la pompe alimente deux freins 101, 102 par l'intermédiaire d'un dispositif d'anti-blocage 121, 122 respectivement. La chambre arrière 46 est alors reliée au moteur de frein dans lequel règne la plus grande pression grâce à la valve bistable 58.

L'homme du métier pourra apporter de nombreux changements à l'invention sans sortir du cadre défini par les revendications annexées.

## Revendications

1. Pompe hydraulique comprenant au moins un piston (20) à cycle alternatif présentant une phase d'aspiration et une phase de refoulement, et coulissant dans un cylindre fixe (22), la dite pompe comportant en outre un clapet anti-retour d'aspiration (32) disposé entre une source de fluide sous basse pression (28) et une chambre de travail (30) définie dans le dit cylindre (22), et un clapet anti-retour de refoulement (34) disposé entre la dite chambre de travail (30) et une chambre de sortie (16) du fluide sous haute pression reliée à un circuit d'utilisation (10, 12), la dite chambre de sortie (16) présente une paroi mobile (40) en fonction de la pression qui règne dans la dite chambre de sortie (16), caractérisée en ce que la dite paroi mobile (40) étant susceptible de commander le blocage du clapet de refoulement (34) en position ouverte sensiblement pendant la majeur partie de la phase d'aspiration lorsque la pression dans la dite chambre de sortie (16) est supérieure à une pression donnée, de telle manière que le dit clapet d'aspiration (32) reste fermé de façon correspondante.

2. Pompe hydraulique selon la revendication 1, caractérisée en ce que la dite paroi mobile (40) est constituée par un piston coulissant dans un alésage (42) dont une des faces reçoit la pression régnant dans la dite chambre de sortie (16), et l'autre face étant chargée par un ressort (44) de raideur déterminée.

3. Pompe hydraulique selon la revendication 2, caractérisée en ce que l'autre face reçoit en outre la pression régnant dans un autre circuit hydraulique.

4. Pompe hydraulique selon la revendication 3, caractérisée en ce que le dit autre circuit hydraulique comprend un conduit communiquant avec une chambre de travail d'un maître cylindre (48).

5. Pompe hydraulique selon la revendication 4, caractérisée en ce qu'un orifice (56) prévu dans le dit piston (40) détermine une restriction faisant communiquer la chambre de sortie (16) et le maître cylindre (48).

6. Pompe hydraulique selon la revendication 3, caractérisée en ce que le dit autre circuit hydraulique comprend un conduit communiquant avec le dit circuit utilisateur (101, 102, 121, 122, 58).

7. Pompe hydraulique selon l'une quelconque des revendications précédentes, caractérisée en ce que le dit clapet de refoulement (34) comporte une butée (54) susceptible de coopérer avec une butée correspondante (50) prévue dans la dite paroi mobile (40) pour entraîner le dit clapet (34) avec la dite paroi mobile (40) après une course déterminée de cette dernière.

8. Pompe hydraulique selon l'une quelconque des revendications 1 à 5, caractérisée en ce que la dite paroi mobile (40) est susceptible d'entraîner de façon limitée une butée (50) pouvant coopérer avec une butée correspondante (54) prévue sur le clapet de refoulement (34) pour ouvrir le dit clapet de refoulement (34) après une course déterminée de la dite paroi mobile (40).

## Patentansprüche

1. Hydraulikpumpe mit wenigstens einem Kolben (20) mit eine Ansaugphase und eine Ausstoßphase aufweisendem, hin- und hergehendem Arbeitstakt, der in einem feststehenden Zylinder (22) gleitet, wobei die Pumpe außerdem ein Ansaug-Rückschlagventil (32) enthält, das zwischen einer Niederdruckfluidquelle (28) und einer im Zylinder (22) definierten Arbeitskammer (30) angeordnet ist, und ein Ausstoß-Rückschlagventil (34), das zwischen der Arbeitskammer (30) und einer Förderkammer (16) für Hochdruckfluid angeordnet ist, die mit einem Arbeitskreis (10, 12) verbunden ist, wobei die Förderkammer (16) eine Wand (40) besitzt, die in Abhängigkeit vom in der Förderkammer (16) herrschenden Druck beweglich ist, dadurch gekennzeichnet, daß die bewegliche Wand (40) in der Lage ist, ein Blockieren des Ausstoßventils (34) in der geöffneten Position im wesentlichen während des größten Teils der Ansaugphase zu steuern, wenn der Druck in der Förderkammer (16) größer als ein gegebener Druck ist, so daß das Ansaugventil (32) in entsprechender Weise geschlossen bleibt.

2. Hydraulikpumpe nach Anspruch 1, dadurch gekennzeichnet, daß die bewegliche Wand (40) durch einen Kolben gebildet ist, der in einer Bohrung (42) gleitet und dessen eine Seite den in der Förderkammer (16) herrschenden Druck empfängt und dessen andere Seite von einer Feder (44) mit bestimmter Steifigkeit beaufschlagt ist.

3. Hydraulikpumpe nach Anspruch 2, dadurch gekennzeichnet, daß die andere Seite außerdem den in einem anderen Hydraulikkreis herrschenden Druck empfängt.

4. Hydraulikpumpe nach Anspruch 3, dadurch gekennzeichnet, daß der andere Hydraulikkreis eine Leitung hat, die mit einer Arbeitskammer eines Hauptzylinders (48) in Verbindung steht.

5. Hydraulikpumpe nach Anspruch 4, dadurch gekennzeichnet, daß eine im Kolben (40) vorgesehene Öffnung (56) eine Drosselstelle definiert, die die Förderkammer (16) mit dem Hauptzylinder (48) verbindet.

6. Hydraulikpumpe nach Anspruch 3, dadurch gekennzeichnet, daß der andere Hydraulikkreis eine Leitung hat, die mit dem Verbraucherkreis (101, 102, 121, 122, 58) in Verbindung steht.

7. Hydraulikpumpe nach einem der vorhergehenden Ansprüche, dadurch gekennzeichnet, daß das Ausstoßventil (34) einen Anschlag (54) besitzt, der in der Lage ist, mit einem zugehörigen, an der beweglichen Wand (40) vorgesehenen Anschlag (50) zusammenzuwirken, um das Ventil (34) mittels der beweglichen Wand (40) nach einem bestimmten Weg der beweglichen Wand mitzunehmen.

8. Hydraulikpumpe nach einem der Ansprüche 1 bis 5, dadurch gekennzeichnet, daß die bewegliche Wand (40) in der Lage ist, einen Anschlag (50) begrenzt mitzunehmen, der mit einem zugehörigen, am Ausstoßventil (34) vorgesehenen Anschlag (54) zusammenwirken kann, um das Ausstoßventil (34) nach einem vorbestimmten Weg der beweglichen Wand (40) zu öffnen.

## Claims

1. Hydraulic pump comprising at least one alternating-cycle piston (20) having a suction phase and a delivery phase, and sliding in a fixed cylinder, said pump possessing in addition a nonreturn suction valve (32) placed between a source of fluid under low pressure (28) and a working chamber (30) defined in said cylinder (22), and a nonreturn delivery valve (34) placed between said working chamber (30) and an output chamber (16) for the fluid under high pressure, connected to an application circuit (10, 12), said output chamber (16) possesses a wall (40) which is movable as a function of the pressure which prevails in said output chamber (16), characterized in that said movable wall (40) being capable of controlling the locking of the delivery valve (34) in an open position substantially during the greater part of the suction phase when the pressure in said output chamber (16) is greater than a given pressure, in such a way that said suction valve (32) stays closed in a corresponding manner.

2. Hydraulic pump according to claim 1, characterized in that said movable wall (40) is constituted by a piston sliding in a bore (42) of which one of the faces receives the pressure prevailing in said output chamber (16), the other face being loaded by a spring (44) having a given stiffness.

3. Hydraulic pump according to claim 2, characterized in that the other face receives, in addition, the pressure prevailing in another hydraulic circuit.

4. Hydraulic pump according to claim 3, characterized in that said other hydraulic circuit comprises a circuit communicating with a working chamber of a master cylinder (48).

5. Hydraulic pump according to claim 4, characterized in that an orifice (56) provided in said piston (40) causes a restriction making the output chamber (16) and the master cylinder (48) communicate.

6. Hydraulic pump according to claim 3, characterized in that said other hydraulic circuit comprises a circuit communicating with said application circuit (101, 102, 121, 122, 58).

7. Hydraulic pump according to any one of the preceding claims, characterized in that said delivery valve (34) possesses a stop (54) capable of cooperating with a corresponding stop (50) provided in said movable wall (40) for entraining said valve (34) with said movable wall (40) after a given travel of the latter.

8. Hydraulic pump according to any one of claims 1 to 5, characterized in that said movable wall (40) is capable of entraining in a limited way a stop (50) able to cooperate with a corresponding stop (54) provided on the delivery valve (34) to open said delivery valve (34) after a given travel of said movable wall (40).
